# EUROPEAN PATENT APPLICATION

(11) **EP 4 436 226 A1**
(43) Date of publication of application: **25.09.2024**
(21) Application number: 23163246.4
(22) Date of filing: 21.03.2023
(51) Int. Cl.: H04W 4/90, H04W 36/14, H04W 36/00

(54) **METHOD FOR CONDUCTING AN EMERGENCY CALL USING A USER EQUIPMENT IN A COUNTRY, OR A GEOGRAPHIC REGION WITHIN A COUNTRY, BEING PART OF THE COVERAGE AREA OF A MOBILE COMMUNICATION NETWORK, USER EQUIPMENT, SYSTEM OR MOBILE COMMUNICATION NETWORK, PROGRAM AND COMPUTER PROGRAM PRODUCT**

(71) Applicant: Deutsche Telekom AG, 53113 Bonn (DE)
(72) Inventor: KABBOUD, Ahmad, 53175 Bonn (DE); SCHÖNING, Philipp, 53175 Bonn (DE); BÜCHTER, Martin, 53840 Troisdorf (DE)
(74) Representative: Schwöbel, Thilo K.

(57) **Abstract**

The present invention relates to a method for conducting an emergency call using a user equipment in a country, or a geographic region within a country, being part of the coverage area of a mobile communication network, the mobile communication network having an access network and a core network,
wherein, in case of an emergency, an emergency call is able to be initiated, by the user equipment, and communicated to the access network in order to be terminated or delivered, by the mobile communication network and in dependency of the location of the user equipment, to a specific public safety answering point,
wherein, a further mobile communication network is able to terminate or deliver emergency calls to the specific public safety answering point as well,
wherein, in order for the user equipment to be able to conduct a specific emergency call in case that an error situation or failure situation prevents the mobile communication network to successfully terminate or deliver the specific emergency call to the public safety answering point, the method comprises the following steps:
-- in a first step, the specific emergency call is initiated by the user equipment and communicated to the access network,
-- in a second step, the mobile communication network detects that an error situation or failure situation prevents the mobile communication network to successfully terminate or deliver the specific emergency call to the public safety answering point,
-- in a third step, the specific emergency call is routed or transferred, by the mobile communication network, to the further mobile communication network, and from there to the public safety answering point, or the user equipment initiates a further emergency call to the public safety answering point, using the further mobile communication network.

## Description

### BACKGROUND

The present invention relates a method for conducting an emergency call using a user equipment in a country, or a geographic region within a country, being part of the coverage area of a mobile communication network, the mobile communication network having an access network and a core network, wherein, in case of an emergency, an emergency call is able to be initiated, by the user equipment, and communicated to the access network in order to be terminated or delivered, by the mobile communication network and in dependency of the location of the user equipment, to a specific public safety answering point.

Furthermore, the present invention relates to a user equipment for conducting an emergency call in a country, or a geographic region within a country, being part of the coverage area of a mobile communication network, the mobile communication network having an access network and a core network, wherein, in case of an emergency, an emergency call is able to be initiated, by the user equipment, and communicated to the access network in order to be terminated or delivered, by the mobile communication network and in dependency of the location of the user equipment, to a specific public safety answering point.

Additionally, the present invention relates to a system or to a mobile communication network for conducting an emergency call using a user equipment in a country, or a geographic region within a country, being part of the coverage area of the mobile communication network, the mobile communication network having an access network and a core network, wherein, in case of an emergency, an emergency call is able to be initiated, by the user equipment, and communicated to the access network in order to be terminated or delivered, by the mobile communication network and in dependency of the location of the user equipment, to a specific public safety answering point.

Furthermore, the present invention relates to a program and to a computer program product for conducting an emergency call using a user equipment in a country, or a geographic region within a country according to the inventive method.

Linked to the nature of emergency calls or eCalls, such calls need to be terminated or delivered in a very reliable manner as they are typically related to emergency situations where it is of utmost importance to act and/or to transmit an information quickly and with the highest possible grade of service. Of course, this is also true for mobile originated emergency calls that are handled by mobile communication networks in case of a user of such a mobile communication network is placing such an emergency call using a user equipment.

In cases or situations where the availability of such an emergency call functionality or an emergency call service is lacking, such an outage or failure of an emergency call service or functionality is typically determined quickly and might lead to a negative perception of the network operators responsible or involved.

Hence, there is a need to address such situations of outage or failure of an emergency call service or functionality.

### SUMMARY

An object of the present invention is to provide an effective and simple solution for conducting an emergency call using a user equipment connected to a mobile communication network even in case of an outage or failure of the emergency call service or functionality of that mobile communication network, i.e. that the user equipment is able to conduct an emergency call even in case that an error situation or failure situation prevents the mobile communication network to successfully terminate or deliver the emergency call to the public safety answering point. A further object of the present invention is to provide a corresponding user equipment, a corresponding system or mobile communication network, and a corresponding program and computer-readable medium.

The object of the present invention is achieved by a method for conducting an emergency call using a user equipment in a country, or a geographic region within a country, being part of the coverage area of a mobile communication network, the mobile communication network having an access network and a core network, wherein, in case of an emergency, an emergency call is able to be initiated, by the user equipment, and communicated to the access network in order to be terminated or delivered, by the mobile communication network and in dependency of the location of the user equipment, to a specific public safety answering point, wherein, a further mobile communication network is able to terminate or deliver emergency calls to the specific public safety answering point as well, wherein, in order for the user equipment to be able to conduct a specific emergency call in case that an error situation or failure situation prevents the mobile communication network to successfully terminate or deliver the specific emergency call to the public safety answering point, the method comprises the following steps:
-- in a first step, the specific emergency call is initiated by the user equipment and communicated to the access network,
-- in a second step, the mobile communication network detects that an error situation or failure situation prevents the mobile communication network to successfully terminate or deliver the specific emergency call to the public safety answering point,
-- in a third step, the specific emergency call is routed or transferred, by the mobile communication network, to the further mobile communication network, and from there to the public safety answering point, or the user equipment initiates a further emergency call to the public safety answering point, using the further mobile communication network.

According to the present invention, it is advantageously possible that the reliability of an emergency call functionality is able to be improved even in case that - regarding a specific mobile communication network (being active in, or covering a certain geographical area, typically within a country or region of a country) - an error situation or failure situation prevents such specific mobile communication network to successfully terminate or deliver emergency calls to a specific public safety answering point. Hence, the present invention proposes new mechanisms that improve the grade of service of mobile emergency services or eCall outage optimization. This is important as a lack of availability and robustness of emergency services is of vital interest of the society and has, in addition, a considerable relevance regarding the perception of the brand of a network operator (of a mobile communication network) and, likewise, the community of mobile network operators as such.

In the context of the present invention, the term emergency call shall refer to mobile-originated emergency calls (i.e. standard phone calls using an emergency number), or to eCalls, i.e. emergency calls where a set of data is transmitted towards the public safety answering point.

In conventionally known mobile communication networks, in cases of failures or a lack of availability of emergency call functionalities, it is known to provide for a switch of the radio access technology used within, however, the same mobile communication network, cf. especially 3GPP TS 23.167.

In conventionally known mobile communication networks, in case that the network is not be able to deliver emergency calls due to backend issues (i.e. especially issues in its core network) a defined procedure for switching the network typically does not apply: Whereas mobile originated emergency calls are local by nature, roaming in the sense that inquiries with another network are due does not apply. Examples of such situations (of the inability to deliver emergency calls due to backend issues) include, e.g.:
-- the public safety answering point, PSAP, not being reachable due to an issue with an interconnection partner, ICP;
-- a routing problem to the public safety answering point due to a wrong configuration;
-- connectivity issues in the backend;
-- the failure of a network entity.

In these scenarios, the emergency call might fail regardless in which radio access technology (2G/3G/4G/5G/6G) the user equipment is registered.

According to the present invention, a method for conducting emergency calls is proposed using the user equipment in a country, or a geographic region within a country, this country or geographic region being part of the coverage area of the mobile communication network. It is assumed, according to the present invention, that an emergency call (especially in case of an emergency) is able to be initiated, by the user equipment, and communicated to the access network of the mobile communication network in order to be terminated or delivered (in dependency of the location of the user equipment) to a specific public safety answering point. Furthermore, at the location of the user equipment, a further mobile communication network is available (to the user equipment) this further mobile communication network likewise being able to terminate or deliver emergency calls to the (same) specific public safety answering point as well. According to the present invention, in order for the user equipment to be able to conduct a specific emergency call in case that an error situation or failure situation prevents the mobile communication network to successfully terminate or deliver the specific emergency call to the public safety answering point, the method comprises the following steps:
-- in a first step, the specific emergency call is initiated by the user equipment and communicated to the access network,
-- in a second step, the mobile communication network detects that an error situation or failure situation prevents the mobile communication network to successfully terminate or deliver the specific emergency call to the public safety answering point,
-- in a third step, according to a first alternative embodiment according to the present invention, the specific emergency call is routed or transferred, by the mobile communication network, to the further mobile communication network, and from there to the public safety answering point; according to a second alternative embodiment according to the present invention, the user equipment initiates a (subsequent) further emergency call to the public safety answering point, (directly) using the further mobile communication network, i.e. bypassing the mobile communication network (despite the mobile communication network corresponding, typically, to a higher-ranking network from the perspective of the user equipment).

It is thereby advantageously possible to provide a more reliable and robust emergency call functionality and/or service.

According to different embodiments according to the present invention, a system or a functionality is provided that checks the network internally frequently and detects if there are any problems that would cause an emergency call (i.e., typically, a 112/110/911 call) to not work properly.

In case of errors, either (a) the network (i.e. the mobile communication network), or (b) the device (i.e. the user equipment) triggers that the device (or user equipment) is enabled to setup the emergency call or eCall via another available network (i.e. the further mobile communication network); this means that either the same (already initiated) emergency call is terminated or delivered via the further mobile communication network to the public safety answering point, or (alternatively) that a subsequent emergency call (separately initiated by the user equipment - either automatically, i.e. without a user interaction (by a user) on or regarding the user equipment or mobile device, or manually triggered, i.e. involving a user interaction of the user of the user equipment) is initiated and terminated or delivered to the public safety answering point. According to the present invention, it is to be understood that these mechanisms are initiated only as soon as an emergency call is invoked. This ensures that services that are not affected by the disruption (of the emergency call functionality or service) are still available if no emergency call (or 112-emergency call) is made.

An exemplary embodiment according to the present invention is able to be described as follows, wherein the device (i.e. the user equipment) in case an initiated emergency call fails (also called network (i.e. the mobile communication network) or device (i.e. user equipment) initiated ("Intelligent network") realization):
-- the network detects that the emergency call is impeded; this can, e.g., be done by (comparatively frequent) scans of "emergency call network readiness" by probe emergency calls that the emergency call is impeded in either technology or by another mechanism;
-- in case of an incoming emergency call the network keeps the registration of the device and transfers the emergency call to another network (i.e. to the further mobile communication network);
-- the emergency call is transferred by the network (i.e. the mobile communication network) the device (i.e. the user equipment) is registered to, to the backbone (i.e. the core network) of another operator (i.e. the further mobile communication network;
-- the transfer is kept for the duration of the emergency call or according to predefined criteria (e.g., timer);
-- the transfer to another network is limited to emergency calls only;
-- the registration to the original network is maintained.

According to at least one embodiment of the present invention, it is advantageously possible and preferred that, in case that the detection - that an error situation or failure situation prevents the mobile communication network to successfully terminate or deliver the specific emergency call to the public safety answering point - occurs subsequent to the specific emergency call being initiated by the user equipment, the specific emergency call - being initiated by the user equipment and communicated to the access network - is routed or transferred, by the mobile communication network, to the further mobile communication network, especially to the core network or backbone of the further mobile communication network, and from there to the public safety answering point,
wherein especially an emergency call error or failure indication is generated - especially by a proxy call session control function, PCSCF, of the mobile communication network in charge of the specific emergency call - and transmitted to a serving gateway, SGW, or to an interconnection border control function, IBCF, of the mobile communication network.

Thereby, it is advantageously possible to realize and implement the inventive method in a comparatively simple and efficient manner, and to terminate the initiated (specific) emergency call (towards the further mobile communication network), even though, at the time of the specific emergency call being initiated, the error of failure situation is not yet detected.

According to at least one embodiment of the present invention, it is furthermore advantageously possible and preferred that the mobile communication network comprises an emergency call verification entity or functionality, wherein the emergency call verification entity or functionality is able to detect that an error situation or failure situation prevents the mobile communication network to successfully terminate or deliver an emergency call to the public safety answering point,
wherein especially such an error situation is detected by means of the emergency call verification entity or functionality repeatedly, at least once during a predefined time interval, conducting probe emergency calls, especially probe emergency calls according to different radio access technologies.

Thereby, it is advantageously possible to realize and implement the inventive method in a comparatively simple and efficient manner, and to be able to detect the error of failure situation within the mobile communication network prior to the specific emergency call being initiated.

According to at least one embodiment of the present invention, it is still furthermore advantageously possible and preferred that, in case that the emergency call verification entity or functionality detects an error situation or failure situation that prevents the mobile communication network to successfully terminate or deliver an emergency call to the public safety answering point, an emergency call error or failure indication is generated, by the mobile communication network, and applied in case of a subsequently incoming emergency call, wherein such specific emergency call - being initiated by the user equipment and communicated to the access network - is routed or transferred, by the mobile communication network, to the further mobile communication network, especially to the core network or backbone of the further mobile communication network, and from there to the public safety answering point.

Thereby, it is advantageously possible to realize and implement the inventive method in a comparatively simple and efficient manner.

According to at least one embodiment of the present invention, it is furthermore advantageously possible and preferred that, in case of the specific emergency call being routed or transferred to the further mobile communication network, especially to the core network or backbone of the further mobile communication network, the registration of the user equipment with the mobile communication network is maintained,
wherein especially the routing or transfer to the further mobile communication network is maintained for the duration of the emergency call or during a predetermined time interval defined by a timer,
wherein especially the routing or transfer to the further mobile communication network is limited to emergency calls.

It is thereby advantageously possible to realize and implement the inventive method in a comparatively simple and efficient manner.

According to at least one embodiment of the present invention, it is furthermore advantageously possible and preferred that, in case that the emergency call verification entity or functionality detects an error situation or failure situation that prevents the mobile communication network to successfully terminate or deliver an emergency call to the public safety answering point, an emergency call error or failure indication is generated, by the mobile communication network, and applied in case of a subsequently incoming emergency call, wherein the user equipment that initiates such specific emergency call is deregistered from the mobile communication network, resulting in the user equipment initiating a further emergency call to the public safety answering point, using the further mobile communication network,
wherein the further emergency call, using the further mobile communication network, is initiated after at least one of the following:
-- the user equipment receives the emergency call error or failure indication from the mobile communication network and initiates the further emergency call using the further mobile communication network,
-- deregistration of the user equipment enables the user equipment to initiate the further emergency call, to the further mobile communication network, in a limited-service state of the user equipment,
-- the mobile communication network rejects any registration attempts of the user equipment, resulting in the user equipment being in a limited-service state.

It is thereby advantageously possible to realize and implement the inventive method in a comparatively simple and efficient manner.

According to at least one embodiment of the present invention, it is furthermore advantageously possible and preferred that the user equipment initiates the specific emergency call and detects that the mobile communication network being unable to successfully terminate or deliver the specific emergency call to the public safety answering point,
wherein the user equipment is deregistered from the mobile communication network,
wherein the further emergency call, using the further mobile communication network, is initiated after at least one of the following:
   -- the mobile communication network is put on the forbidden network list of the user equipment,
   -- deregistration of the user equipment enables the user equipment to initiate the further emergency call, to the further mobile communication network, in a limited-service state of the user equipment,
   -- the mobile communication network rejects any registration attempts of the user equipment, resulting in the user equipment being in a limited-service state,
wherein especially the mobile communication network is removed from the forbidden network list of the user equipment after the further emergency call is terminated and/or after a predetermined time interval defined by a timer.

It is thereby advantageously possible to realize and implement the inventive method in a comparatively simple and efficient manner.

Furthermore, the present invention relates to a user equipment for conducting an emergency call in a country, or a geographic region within a country, being part of the coverage area of a mobile communication network, the mobile communication network having an access network and a core network,
wherein, in case of an emergency, an emergency call is able to be initiated, by the user equipment, and communicated to the access network in order to be terminated or delivered, by the mobile communication network and in dependency of the location of the user equipment, to a specific public safety answering point,
wherein, a further mobile communication network is able to terminated or deliver emergency calls to the specific public safety answering point as well,
wherein, in order for the user equipment to be able to conduct a specific emergency call in case that an error situation or failure situation prevents the mobile communication network to successfully terminate or deliver the specific emergency call to the public safety answering point, the user equipment is configured such that:
   -- the specific emergency call is initiated by the user equipment and communicated to the access network,
   -- the mobile communication network detects that an error situation or failure situation prevents the mobile communication network to successfully terminate or deliver the specific emergency call to the public safety answering point,
   -- the specific emergency call is routed or transferred, by the mobile communication network, to the further mobile communication network, and from there to the public safety answering point, or the user equipment initiates a further emergency call to the public safety answering point, using the further mobile communication network.

Furthermore, the present invention relates to a system or to a mobile communication network for conducting an emergency call using a user equipment in a country, or a geographic region within a country, being part of the coverage area of the mobile communication network, the mobile communication network having an access network and a core network,
wherein, in case of an emergency, an emergency call is able to be initiated, by the user equipment, and communicated to the access network in order to be terminated or delivered, by the mobile communication network and in dependency of the location of the user equipment, to a specific public safety answering point,
wherein, a further mobile communication network is able to terminate or deliver emergency calls to the specific public safety answering point as well,
wherein, in order for the user equipment to be able to conduct a specific emergency call in case that an error situation or failure situation prevents the mobile communication network to successfully terminate or deliver the specific emergency call to the public safety answering point, the system or mobile communication network being configured such that:
   -- the specific emergency call is initiated by the user equipment and communicated to the access network,
   -- the mobile communication network detects that an error situation or failure situation prevents the mobile communication network to successfully terminate or deliver the specific emergency call to the public safety answering point,
   -- the specific emergency call is routed or transferred, by the mobile communication network, to the further mobile communication network, and from there to the public safety answering point, or the user equipment initiates a further emergency call to the public safety answering point, using the further mobile communication network.

Additionally, the present invention relates to a program comprising a computer readable program code which, when executed on a computer or on a user equipment or on a network node of a mobile communication network, causes the computer or the user equipment or the network node of the mobile communication network to perform the inventive method.

Still additionally, the present invention relates to a computer-readable medium comprising instructions which when executed on a computer or on a user equipment or on a network node of a mobile communication network, causes the computer or the user equipment or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrates a mobile communication network with a user equipment connected to the mobile communication network in a situation where the user equipment is attempting to conduct or to place an emergency call and wherein, in case that an error situation or failure situation prevents the mobile communication network to successfully terminate or deliver the specific emergency call to a public safety answering point, the considered emergency call is nevertheless terminated or delivered by means of using a further mobile communication network.
**Figure 2** schematically illustrates the mobile communication network with the user equipment as well as with the further mobile communication network, and refers to an embodiment according to the present invention.
**Figure 3** schematically illustrates the mobile communication network with the user equipment as well as with the further mobile communication network, and refers to another embodiment according to the present invention.
**Figure 4** schematically illustrates the mobile communication network with the user equipment as well as with the further mobile communication network, and refers to still another embodiment according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

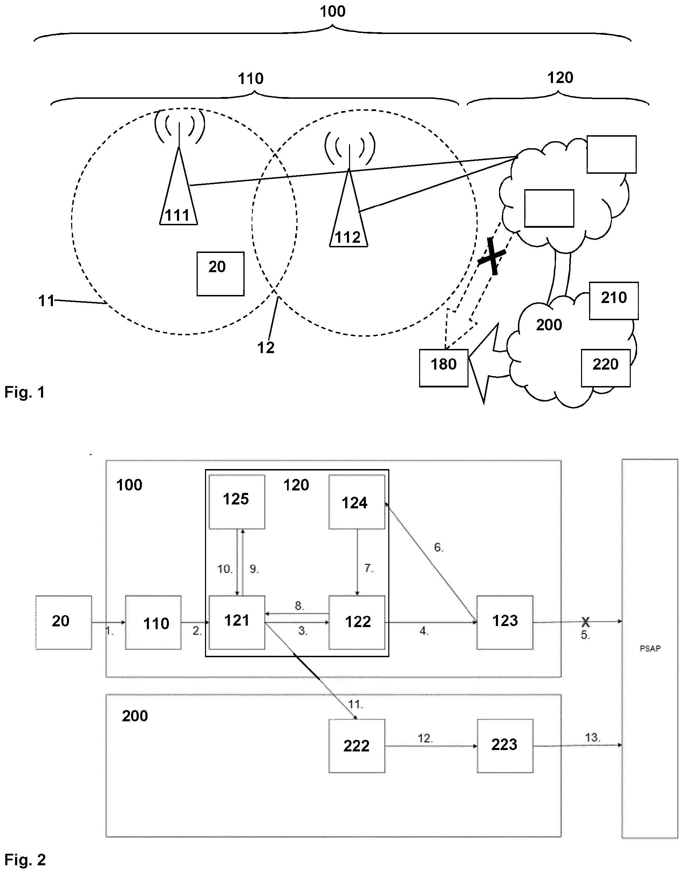

In Figure 1, a telecommunications network 100, especially a mobile communication network 100, is schematically shown. The mobile communication network 100 comprises an access network 110 and a core network 120, and a user equipment 20 is connected to the mobile communication network 100 via the access network 110. The mobile communication network 100 is especially realized as a mobile (cellular) communication network 100, and the access network 110 of the mobile communication network 100 exemplary comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 - if connected to or with the mobile communication network 100 - is connected, via a radio interface or air interface, to the first base station entity 111 of the access network 110 of the mobile communication network 100.

In case of an emergency, an emergency call is able to be initiated, by the user equipment 20. Such an emergency call is then communicated to the access network 110 (via the first base station entity 111) in order to be terminated or delivered, by the mobile communication network 100. In dependency of the current location of the user equipment 20 a specific public safety answering point 180 is selected, typically by the mobile communication network 100, where the initiated emergency call is terminated or delivered. Typically, in a country - or in a geographic region within a country - being part of the coverage area of the mobile communication network 100, a plurality of public safety answering points are realized or located, each of these public safety answering points being, typically, assigned to or associated with a certain geographical area (nevertheless, for the sake of simplicity, only one public safety answering point 180 is schematically represented in Figure 1). In case a user equipment 20 initiates an emergency call while being located in a specific geographical area, such assignment of public safety answering points to geographical areas (or vice versa) entails that such an emergency call is directed (or terminated or delivered) to the respective specific public safety answering point 180. However likewise for the sake of simplicity, neither geographical areas not their assignment to specific public safety answering points are represented in Figure 1.

According to the present invention, in case that the user equipment 20 is attempting to conduct or to place an emergency call while the mobile communication network 100 is in an error situation or a failure situation that prevents the mobile communication network 100 to successfully terminate or deliver such an emergency call to the public safety answering point 180, the considered emergency call is nevertheless terminated or delivered by means of using a further mobile communication network 200. Such a situation is schematically illustrated, in Figure 1, by means of a dashed arrow, emanating from the core network 120 of the mobile communication network 100, pointing to the public safety answering point 180, and carrying a cross. Another arrow, represented, in Figure 1, in a drawn-through manner, likewise emanates from the core network 120 of the mobile communication network 100, passes by (or through) the further mobile communication network 200, and likewise points to the public safety answering point 180.

In a manner analogous to the mobile communication network 100, also the further telecommunications network 200 comprises an access network 210 and a core network 220.

According to the present invention, a method for conducting an emergency call using the user equipment 20 is proposed. In case of an emergency situation or the necessity to initiate an emergency call, the user equipment 20 is able to initiate an emergency call that is communicated to the access network 110 of the mobile communication network 100 in order to be terminated or delivered, by the mobile communication network 100 and in dependency of the location of the user equipment 20, to the public safety answering point 180 (being the specific public safety answering point 180 assigned to where the user equipment 20 is currently located).

Of course, the further mobile communication network 200 is likewise able, in principle, to terminate or deliver emergency calls to the (same) specific public safety answering point 180. According to the present invention, a specific emergency call is considered, this emergency call being initiated by the user equipment 20, and communicated to the mobile communication network 100, as the mobile communication network 100 is typically the home (or, at least, preferred or higher-ranking) mobile communication network (home public land mobile network, HPLMN, or equivalent (home) public land mobile network, EPLMN/EHPLMN) for (or of) the considered user equipment 20.

In case that an error situation or failure situation prevents the mobile communication network 100 to successfully terminate or deliver the specific emergency call to the public safety answering point 180, according to the present invention the initiation of the specific emergency call comprises or involves the following steps:
-- in a first step, the specific emergency call is initiated by the user equipment 20 and communicated to the access network 110 (of the mobile communication network 100);
-- in a second step, the mobile communication network 100 detects that an error situation or failure situation prevents the mobile communication network 100 to successfully terminate or deliver the specific emergency call to the public safety answering point 180;
-- in a third step, according to a first alternative according to the present invention, the specific emergency call is routed or transferred, by the mobile communication network 100, to the further mobile communication network 200, and from there to the public safety answering point 180; according to a second alternative according to the present invention, the user equipment 20 initiates a (subsequent) further emergency call to the public safety answering point 180, (directly) using the further mobile communication network 200, i.e. bypassing the mobile communication network 100 (despite the mobile communication network 100 corresponding to a higher-ranking network).

In Figure 2, the mobile communication network 100 with the user equipment 20 as well as with the further mobile communication network 200 is schematically shown, referring to a preferred embodiment according to the present invention. Especially, Figure 2 shows the situation of the mobile communication network 100 being a fourth generation network (4G network); however, the same approach shall be used in a fifth generation network, especially a fifth generation access network (5G access network):
In a first processing step 1, the user equipment 20 triggers the (specific) emergency call;
in a second, third, and fourth processing step 2, 3, 4, the (specific) emergency call is sent (via the radio access network 110 of the mobile communication network 100, a serving gateway, SGW, 121, as well as a packet gateway, PGW, 122 of the core network 120 of the mobile communication network 100) to the dedicated proxy-call session control function, PCSCF, 123 of the mobile communication network 100 (especially the home public land mobile network, HPLMN, of the user equipment 20 or the network of a roaming partner.
In a fifth processing step 5, the proxy-call session control function 123, PCSCF, sends the (specific) emergency call to the destination (i.e. the public safety answering point 180) through the IP multimedia subsystem core, IMS core, where an error code is returned that the (specific) emergency call could not be delivered (cf. the crossed-out connection to the public safety answering point 180 of the fifth processing step 5 in Figure 2).
In a sixth processing step 6, the proxy-call session control function, PCSCF, 123 informs a policy and charging rules function, PCRF, 124 about the unsuccessful emergency call attempt, especially with a specific error code.
In a seventh processing step 7, the policy and charging rules function, PCRF 124 asks the packet gateway, PGW, 122 to release the session with a specific error code.
In an eighth processing step 8, the packet gateway, PGW, 122 releases the data session with a specific error code.
In an eighth, ninth, tenth, and eleventh processing step 8, 9, 10, 11, the serving gateway, SGW, 121 informs the mobility management entity, MME 125 about the release reason which triggers an enhanced packet gateway, PGW, 122 selection mechanism that triggers the emergency session to be transferred to the further mobile communication network 200, especially a national roaming network, and there especially to a further proxy gateway 222 of the (core network 220 of the) further mobile communication network 200, and then to a further proxy-call session control function 223 of the (core network 220 of the) further mobile communication network 200.
The device (i.e. the user equipment 20) shall try again automatic to deliver the emergency call (retry of the call setup) once it receives a specific error code from network (i.e. the mobile communication network 100).
In a twelfth and thirteenth processing step 12,13, the (specific) emergency call is terminated or delivered by the further mobile communication network 200 to (or at) the specific public safety answering point 180.

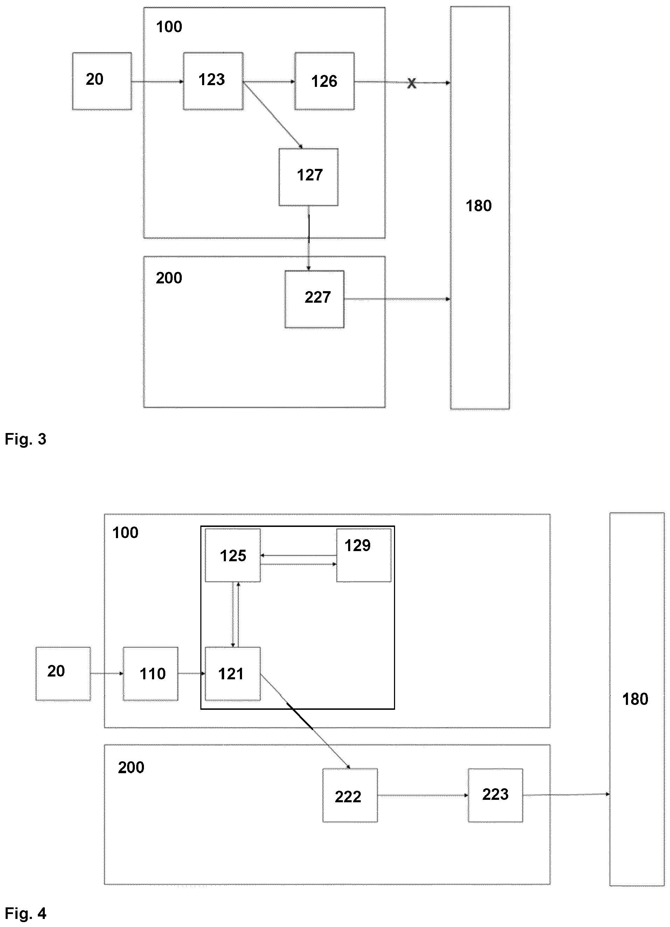

In Figure 3, the mobile communication network 100 with the user equipment 20 as well as with the further mobile communication network 200 is schematically shown, referring to a further preferred embodiment according to the present invention:
The user equipment 20 triggers the (specific) emergency call and tries to send the (specific) emergency call to the mobile communication network 100 (especially the home public land mobile network, HPLMN, of the user equipment 20 or the network of a roaming partner), involving, in the mobile communication network 100, the dedicated proxy-call session control function, PCSCF, 123 and an emergency-call session control function, ECSCF, 126 (of the mobile communication network 100). In case that an error is received (cf. the crossed-out connection to the public safety answering point 180 in Figure 3), the proxy-call session control function, PCSCF, 123 will send the (specific) emergency call to another network (i.e. to the further mobile communication network 200), especially through an interconnection border control function, IBCF, 127 of the mobile communication network 100, and a further interconnection border control function 227 of the further mobile communication network 200.

Hence, the embodiments shown in Figures 2 and 3 are examples of the inventive method where the detection - that the error situation or failure situation prevents the mobile communication network 100 to successfully terminate or deliver the specific emergency call to the public safety answering point 180 - occurs subsequent to the specific emergency call being initiated by the user equipment 20. In this case (and nevertheless that the detection of such failure situation occurs after the specific emergency call being already initiated), the specific emergency call is routed or transferred, by the mobile communication network 100, to the further mobile communication network 200, especially to the core network or backbone of the further mobile communication network 200, and from there to the public safety answering point 180 (involving especially an emergency call error or failure indication and/or involving especially the proxy call session control function, PCSCF, 123, of the mobile communication network 100 in charge of the specific emergency call and the serving gateway, SGW, 121 or the interconnection border control function, IBCF, 127 of the mobile communication network 100.

In Figure 4, the mobile communication network 100 with the user equipment 20 as well as with the further mobile communication network 200 is schematically shown, referring to a further preferred embodiment according to the present invention:
The user equipment 20 triggers the (specific) emergency call (especially realizes an emergency attach (or attachment procedure) to the mobile communication network 100) - via the radio access network 110 of the mobile communication network 100 and the serving gateway, SGW, 121. The mobility management entity 125 of the mobile communication network 100 asks first an emergency call verification entity or functionality 129 of the mobile communication network 100 whether the mobile communication network 100 is able to deliver the (specific) emergency call. In case this is not verified (i.e. the failure situation applies and the emergency call is not able to be terminated or delivered to the public safety answering point 180), the mobility management entity 125 especially uses a special access point name, APN, to route the session to the further mobile communication network 200, especially a national roaming partner network - and especially in a manner analogous to the eleventh, twelfth, and thirteenth processing steps 11, 12, 13 as described with reference to Figure 2, i.e. the emergency session (i.e. the (specific) emergency call) is triggered to be transferred to the further mobile communication network 200, and there especially to a further proxy gateway 222 of the (core network 220 of the) further mobile communication network 200, and then to a further proxy-call session control function 223 of the (core network 220 of the) further mobile communication network 200.

Hence, the embodiment shown in Figure 4 is an example of the inventive method where the mobile communication network 100 comprises the emergency call verification entity or functionality 129, wherein the emergency call verification entity or functionality 129 is able to detect that the error situation or failure situation prevents the mobile communication network 100 to successfully terminate or deliver an emergency call to the public safety answering point 180. Hence, it is possible to involve the further mobile communication network 200 at a comparatively early point in time (i.e. especially without the necessity to first attempt to terminate or deliver the emergency call to the public safety answering point 180).

All embodiments shown in Figures 2, 3 and 4 are examples of the inventive method where - in case of the specific emergency call being routed or transferred to the further mobile communication network 200, especially to the core network or backbone of the further mobile communication network 200 - the registration of the user equipment 20 with the mobile communication network 100 is maintained.

While the embodiments shown in Figures 2, 3 and 4 are examples of the inventive method where a rather network-oriented approach is used for detecting that an error situation or failure situation prevents the mobile communication network 100 to successfully terminate or deliver the specific emergency call to the public safety answering point 180 - according to further embodiments of the present invention, a rather device-oriented approach is also possible to be implemented according to the present invention.

Basically, such a device-oriented approach involves (or requires) that the user equipment 20 (i.e. the one initiating the (specific) emergency call towards the mobile communication network 100) derives, or deduces, from the behavior of the mobile communication network 100 that a failure situation applies (for successfully terminating or delivering the (specific) emergency call to the public safety answering point 180). This is, e.g., the case if the device (or user equipment) 20 tries to setup the emergency call in different access technologies according to 3GPP TS 23.167. The device (or user equipment) 20 detects that the emergency call is impeded in either technology while it does not receive the indication that the connection is held by the network, or, alternatively, an (explicit) error message is returned, i.e. an error message allowing the user equipment 20 to infer that the failure situation applies (regarding emergency calls) within the mobile communication network 100.

In such a situation (i.e. if a fault is detected by the user equipment 20, or the failure situation is indicated to the user equipment 20) the device (or user equipment) 20 is deregistered; subsequently, the device (or user equipment) 20 sets the network (i.e. the mobile communication network 100) to which it is fully registered to the forbidden network list and deregisters from the network, i.e. from the mobile communication network 100. The device (or user equipment) 20 is now in a limited-service state and is enabled and/or automatically retries to place an emergency call (i.e. the further emergency call according to the second alternative of the third step of the inventive method) via any other network available. Optionally, the user equipment 20 is instructed to dial 112, i.e. place the further emergency call, immediately after deregistration, i.e. there is no need of a user interaction in order to trigger the further emergency call.

Especially, the assignment of the network (i.e. the mobile communication network 100) to the forbidden network list (of the user equipment 20, especially in a memory within the subscriber identity module or the universal integrated circuit card module) is maintained according to a defined timer or until the emergency call was ended.

In case of roaming (i.e. the mobile communication network 100 corresponds to a visited network), the network to which the device (or user equipment) 20 is registered (VPLMN of a roaming partner) needs to interact with the HLR (Home Location Register) of its home network or HPLMN.

Hence, according to such a device-oriented approach the user equipment 20 initiates the (first) specific emergency call and detects that the mobile communication network 100 is unable to successfully terminate or deliver the specific emergency call to the public safety answering point 180, wherein the user equipment 20 is either deregistered from the mobile communication network 100 (or deregisters itself from the mobile communication network 100), and initiates the further (or second) emergency call, using the further mobile communication network 200 after at least one of the following:
-- the mobile communication network 100 is put on the forbidden network list of the user equipment 20,
-- deregistration of the user equipment 20 enables the user equipment 20 to initiate the further emergency call, to the further mobile communication network 200, in a limited-service state of the user equipment 20,
-- the mobile communication network 100 rejects any registration attempts of the user equipment 20, resulting in the user equipment 20 being in a limited-service state, wherein especially the mobile communication network 100 is removed from the forbidden network list of the user equipment 20 after the further emergency call is terminated and/or after a predetermined time interval defined by a timer.

A further example of the inventive method also corresponds to a network-oriented approach; however, such a variant of a network-oriented approach nevertheless requires a further emergency call to be initiated by the user equipment 20:
The device (or user equipment) 20 tries to setup the (specific) emergency call in different access technologies according to 3GPP TS 23.167;
the network (i.e. the mobile communication network 100) detects - by means of frequent scans of "emergency call network readiness", especially by means of probe emergency calls and/or by means of the emergency call verification entity or functionality 129 - that the emergency call is impeded in either technology.

In case that such a failure situation applies (i.e. a fault is detected) in the mobile communication network 100 and a fully registered user dials an emergency number, the mobile (or user equipment) 20 of the calling party is enforced to be deregistered. The deregistration enables the caller in need to place an emergency call in limited-service state over any network that provides coverage in the area from where the emergency call originates; the network (mobile communication network 100) rejects any registration attempts of the device (user equipment) 20; the device is now in limited-service state and enabled to place emergency calls via any other network available.

The benefit of this approach is that there is no impact on the devices; the downside is that the forbidden network list in the device / SIM has to be altered afterwards.

If a fault is detected and depending on which access technology is affected, the respective indicators of the part of the network affected or for the entire network are disabled.

This is to ensure that other emergency call attempts in the respective access technology are ruled out before an emergency call attempt.

Hence, according to such a network-oriented approach, in case that the emergency call verification entity or functionality 129 detects an error situation or failure situation that prevents the mobile communication network 100 to successfully terminate or deliver an emergency call to the public safety answering point 180, an emergency call error or failure indication is generated, by the mobile communication network 100, and applied in case of a subsequently incoming emergency call, wherein the user equipment 20 that initiates such specific emergency call is deregistered from the mobile communication network 100, resulting in the user equipment 20 initiating a further (or second) emergency call to the public safety answering point 180, using the further mobile communication network 200,
wherein the further emergency call, using the further mobile communication network 200, is initiated after at least one of the following:
-- the user equipment 20 receives the emergency call error or failure indication from the mobile communication network 100 and initiates the further emergency call using the further mobile communication network 200,
-- deregistration of the user equipment 20 enables the user equipment 20 to initiate the further emergency call, to the further mobile communication network 200, in a limited-service state of the user equipment 20,
-- the mobile communication network 100 rejects any registration attempts of the user equipment 20, resulting in the user equipment 20 being in a limited-service state.

## Claims

1. Method for conducting an emergency call using a user equipment (20) in a country, or a geographic region within a country, being part of the coverage area of a mobile communication network (100), the mobile communication network (100) having an access network (110) and a core network (120), wherein, in case of an emergency, an emergency call is able to be initiated, by the user equipment (20), and communicated to the access network (110) in order to be terminated or delivered, by the mobile communication network (100) and in dependency of the location of the user equipment (20), to a specific public safety answering point (180),
wherein, a further mobile communication network (200) is able to terminate or deliver emergency calls to the specific public safety answering point (180) as well,
wherein, in order for the user equipment (20) to be able to conduct a specific emergency call in case that an error situation or failure situation prevents the mobile communication network (100) to successfully terminate or deliver the specific emergency call to the public safety answering point (180), the method comprises the following steps:
-- in a first step, the specific emergency call is initiated by the user equipment (20) and communicated to the access network (110),
-- in a second step, the mobile communication network (100) detects that an error situation or failure situation prevents the mobile communication network (100) to successfully terminate or deliver the specific emergency call to the public safety answering point (180),
-- in a third step, the specific emergency call is routed or transferred, by the mobile communication network (100), to the further mobile communication network (200), and from there to the public safety answering point (180), or the user equipment (20) initiates a further emergency call to the public safety answering point (180), using the further mobile communication network (200).

2. Method according to claim 1, wherein, in case that the detection - that an error situation or failure situation prevents the mobile communication network (100) to successfully terminate or deliver the specific emergency call to the public safety answering point (180) - occurs subsequent to the specific emergency call being initiated by the user equipment (20), the specific emergency call - being initiated by the user equipment (20) and communicated to the access network (110) - is routed or transferred, by the mobile communication network (100), to the further mobile communication network (200), especially to the core network or backbone of the further mobile communication network (200), and from there to the public safety answering point (180),
wherein especially an emergency call error or failure indication is generated - especially by a proxy call session control function, PCSCF, of the mobile communication network (100) in charge of the specific emergency call - and transmitted to a serving gateway, SGW, or to an interconnection border control function, IBCF, of the mobile communication network (100).

3. Method according to one of the preceding claims, wherein the mobile communication network (100) comprises an emergency call verification entity or functionality (129), wherein the emergency call verification entity or functionality (129) is able to detect that an error situation or failure situation prevents the mobile communication network (100) to successfully terminate or deliver an emergency call to the public safety answering point (180), wherein especially such an error situation is detected by means of the emergency call verification entity or functionality (129) repeatedly, at least once during a predefined time interval, conducting probe emergency calls, especially probe emergency calls according to different radio access technologies.

4. Method according to one of the preceding claims, wherein, in case that the emergency call verification entity or functionality (129) detects an error situation or failure situation that prevents the mobile communication network (100) to successfully terminate or deliver an emergency call to the public safety answering point (180), an emergency call error or failure indication is generated, by the mobile communication network (100), and applied in case of a subsequently incoming emergency call, wherein such specific emergency call - being initiated by the user equipment (20) and communicated to the access network (110) - is routed or transferred, by the mobile communication network (100), to the further mobile communication network (200), especially to the core network or backbone of the further mobile communication network (200), and from there to the public safety answering point (180).

5. Method according to one of the preceding claims, wherein, in case of the specific emergency call being routed or transferred to the further mobile communication network (200), especially to the core network or backbone of the further mobile communication network (200), the registration of the user equipment (20) with the mobile communication network (100) is maintained, wherein especially the routing or transfer to the further mobile communication network (200) is maintained for the duration of the emergency call or during a predetermined time interval defined by a timer,
wherein especially the routing or transfer to the further mobile communication network (200) is limited to emergency calls.

6. Method according to one of the preceding claims, wherein, in case that the emergency call verification entity or functionality (129) detects an error situation or failure situation that prevents the mobile communication network (100) to successfully terminate or deliver an emergency call to the public safety answering point (180), an emergency call error or failure indication is generated, by the mobile communication network (100), and applied in case of a subsequently incoming emergency call, wherein the user equipment (20) that initiates such specific emergency call is deregistered from the mobile communication network (100), resulting in the user equipment (20) initiating a further emergency call to the public safety answering point (180), using the further mobile communication network (200),
wherein the further emergency call, using the further mobile communication network (200), is initiated after at least one of the following:
-- the user equipment (20) receives the emergency call error or failure indication from the mobile communication network (100) and initiates the further emergency call using the further mobile communication network (200),
-- deregistration of the user equipment (20) enables the user equipment (20) to initiate the further emergency call, to the further mobile communication network (200), in a limited-service state of the user equipment (20),
-- the mobile communication network (100) rejects any registration attempts of the user equipment (20), resulting in the user equipment (20) being in a limited-service state.

7. Method according to one of the preceding claims, wherein the user equipment (20) initiates the specific emergency call and detects that the mobile communication network (100) being unable to successfully terminate or deliver the specific emergency call to the public safety answering point (180),
wherein the user equipment (20) is deregistered from the mobile communication network (100),
wherein the further emergency call, using the further mobile communication network (200), is initiated after at least one of the following:
-- the mobile communication network (100) is put on the forbidden network list of the user equipment (20),
-- deregistration of the user equipment (20) enables the user equipment (20) to initiate the further emergency call, to the further mobile communication network (200), in a limited-service state of the user equipment (20),
-- the mobile communication network (100) rejects any registration attempts of the user equipment (20), resulting in the user equipment (20) being in a limited-service state,
wherein especially the mobile communication network (100) is removed from the forbidden network list of the user equipment (20) after the further emergency call is terminated and/or after a predetermined time interval defined by a timer.

8. User equipment for conducting an emergency call in a country, or a geographic region within a country, being part of the coverage area of a mobile communication network (100), the mobile communication network (100) having an access network (110) and a core network (120),
wherein, in case of an emergency, an emergency call is able to be initiated, by the user equipment (20), and communicated to the access network (110) in order to be terminated or delivered, by the mobile communication network (100) and in dependency of the location of the user equipment (20), to a specific public safety answering point (180),
wherein, a further mobile communication network (200) is able to terminated or deliver emergency calls to the specific public safety answering point (180) as well,
wherein, in order for the user equipment (20) to be able to conduct a specific emergency call in case that an error situation or failure situation prevents the mobile communication network (100) to successfully terminate or deliver the specific emergency call to the public safety answering point (180), the user equipment (20) is configured such that:
-- the specific emergency call is initiated by the user equipment (20) and communicated to the access network (110),
-- the mobile communication network (100) detects that an error situation or failure situation prevents the mobile communication network (100) to successfully terminate or deliver the specific emergency call to the public safety answering point (180),
-- the specific emergency call is routed or transferred, by the mobile communication network (100), to the further mobile communication network (200), and from there to the public safety answering point (180), or the user equipment (20) initiates a further emergency call to the public safety answering point (180), using the further mobile communication network (200).

9. System or mobile communication network (100) for conducting an emergency call using a user equipment (20) in a country, or a geographic region within a country, being part of the coverage area of the mobile communication network (100), the mobile communication network (100) having an access network (110) and a core network (120),
wherein, in case of an emergency, an emergency call is able to be initiated, by the user equipment (20), and communicated to the access network (110) in order to be terminated or delivered, by the mobile communication network (100) and in dependency of the location of the user equipment (20), to a specific public safety answering point (180),
wherein, a further mobile communication network (200) is able to terminate or deliver emergency calls to the specific public safety answering point (180) as well,
wherein, in order for the user equipment (20) to be able to conduct a specific emergency call in case that an error situation or failure situation prevents the mobile communication network (100) to successfully terminate or deliver the specific emergency call to the public safety answering point (180), the system or mobile communication network (100) being configured such that:
-- the specific emergency call is initiated by the user equipment (20) and communicated to the access network (110),
-- the mobile communication network (100) detects that an error situation or failure situation prevents the mobile communication network (100) to successfully terminate or deliver the specific emergency call to the public safety answering point (180),
-- the specific emergency call is routed or transferred, by the mobile communication network (100), to the further mobile communication network (200), and from there to the public safety answering point (180), or the user equipment (20) initiates a further emergency call to the public safety answering point (180), using the further mobile communication network (200).

10. Program comprising a computer readable program code which, when executed on a computer or on a user equipment (20) or on a network node of a mobile communication network (100), causes the computer or the user equipment (20) or the network node of the mobile communication network (100) to perform a method according one of claims 1 to 7.

11. Computer-readable medium comprising instructions which when executed on a computer or on a user equipment (20) or on a network node of a mobile communication network (100), causes the computer or the user equipment (20) or the network node of the mobile communication network (100) to perform a method according one of claims 1 to 7.

## Amended claims

### Amended claims in accordance with Rule 137(2) EPC.

1. Method for conducting an emergency call using a user equipment (20) in a country, or a geographic region within a country, being part of the coverage area of a mobile communication network (100), the mobile communication network (100) having an access network (110) and a core network (120), wherein, in case of an emergency, an emergency call is able to be initiated, by the user equipment (20), and communicated to the access network (110) in order to be terminated or delivered, by the mobile communication network (100) and in dependency of the location of the user equipment (20), to a specific public safety answering point (180),
wherein, a further mobile communication network (200) is able to terminate or deliver emergency calls to the specific public safety answering point (180) as well,
**characterized in that**, in order for the user equipment (20) to be able to conduct a specific emergency call in case that an error situation or failure situation prevents the mobile communication network (100) to successfully terminate or deliver the specific emergency call to the public safety answering point (180), the method comprises the following steps:
-- in a first step, the specific emergency call is initiated by the user equipment (20) and communicated to the access network (110),
-- in a second step, the mobile communication network (100) detects that an error situation or failure situation prevents the mobile communication network (100) to successfully terminate or deliver the specific emergency call to the public safety answering point (180), wherein the mobile communication network (100) comprises an emergency call verification entity or functionality (129), wherein the emergency call verification entity or functionality (129) is able to detect that an error situation or failure situation prevents the mobile communication network (100) to successfully terminate or deliver an emergency call to the public safety answering point (180),
wherein such an error situation or failure situation is detected by means of the emergency call verification entity or functionality (129) repeatedly, at least once during a predefined time interval, conducting probe emergency calls,
-- in a third step, the specific emergency call is routed or transferred, by the mobile communication network (100), to the further mobile communication network (200), and from there to the public safety answering point (180), or the user equipment (20) initiates a further emergency call to the public safety answering point (180), using the further mobile communication network (200).

2. Method according to claim 1, wherein, in case that the detection - that an error situation or failure situation prevents the mobile communication network (100) to successfully terminate or deliver the specific emergency call to the public safety answering point (180) - occurs subsequent to the specific emergency call being initiated by the user equipment (20), the specific emergency call - being initiated by the user equipment (20) and communicated to the access network (110) - is routed or transferred, by the mobile communication network (100), to the further mobile communication network (200), especially to the core network or backbone of the further mobile communication network (200), and from there to the public safety answering point (180),
wherein especially an emergency call error or failure indication is generated - especially by a proxy call session control function, PCSCF, of the mobile communication network (100) in charge of the specific emergency call - and transmitted to a serving gateway, SGW, or to an interconnection border control function, IBCF, of the mobile communication network (100).

3. Method according to one of the preceding claims, wherein the error situation is detected by means of the emergency call verification entity or functionality (129) conducting probe emergency calls according to different radio access technologies.

4. Method according to one of the preceding claims, wherein, in case that the emergency call verification entity or functionality (129) detects an error situation or failure situation that prevents the mobile communication network (100) to successfully terminate or deliver an emergency call to the public safety answering point (180), an emergency call error or failure indication is generated, by the mobile communication network (100), and applied in case of a subsequently incoming emergency call, wherein such specific emergency call - being initiated by the user equipment (20) and communicated to the access network (110) - is routed or transferred, by the mobile communication network (100), to the further mobile communication network (200), especially to the core network or backbone of the further mobile communication network (200), and from there to the public safety answering point (180).

5. Method according to one of the preceding claims, wherein, in case of the specific emergency call being routed or transferred to the further mobile communication network (200), especially to the core network or backbone of the further mobile communication network (200), the registration of the user equipment (20) with the mobile communication network (100) is maintained, wherein especially the routing or transfer to the further mobile communication network (200) is maintained for the duration of the emergency call or during a predetermined time interval defined by a timer,
wherein especially the routing or transfer to the further mobile communication network (200) is limited to emergency calls.

6. Method according to one of the preceding claims, wherein, in case that the emergency call verification entity or functionality (129) detects an error situation or failure situation that prevents the mobile communication network (100) to successfully terminate or deliver an emergency call to the public safety answering point (180), an emergency call error or failure indication is generated, by the mobile communication network (100), and applied in case of a subsequently incoming emergency call, wherein the user equipment (20) that initiates such specific emergency call is deregistered from the mobile communication network (100), resulting in the user equipment (20) initiating a further emergency call to the public safety answering point (180), using the further mobile communication network (200),
wherein the further emergency call, using the further mobile communication network (200), is initiated after at least one of the following:
-- the user equipment (20) receives the emergency call error or failure indication from the mobile communication network (100) and initiates the further emergency call using the further mobile communication network (200),
-- deregistration of the user equipment (20) enables the user equipment (20) to initiate the further emergency call, to the further mobile communication network (200), in a limited-service state of the user equipment (20),
-- the mobile communication network (100) rejects any registration attempts of the user equipment (20), resulting in the user equipment (20) being in a limited-service state.

7. Method according to one of the preceding claims, wherein the user equipment (20) initiates the specific emergency call and detects that the mobile communication network (100) being unable to successfully terminate or deliver the specific emergency call to the public safety answering point (180), wherein the user equipment (20) is deregistered from the mobile communication network (100),
wherein the further emergency call, using the further mobile communication network (200), is initiated after at least one of the following:
-- the mobile communication network (100) is put on the forbidden network list of the user equipment (20),
-- deregistration of the user equipment (20) enables the user equipment (20) to initiate the further emergency call, to the further mobile communication network (200), in a limited-service state of the user equipment (20),
-- the mobile communication network (100) rejects any registration attempts of the user equipment (20), resulting in the user equipment (20) being in a limited-service state,
wherein especially the mobile communication network (100) is removed from the forbidden network list of the user equipment (20) after the further emergency call is terminated and/or after a predetermined time interval defined by a timer.

8. Mobile communication network (100) for conducting an emergency call initiated by a user equipment (20) in a country, or a geographic region within a country, being part of the coverage area of the mobile communication network (100), the mobile communication network (100) having an access network (110) and a core network (120),
wherein, in case of an emergency, an emergency call is able to be initiated, by the user equipment (20), and communicated to the access network (110) in order to be terminated or delivered, by the mobile communication network (100) and in dependency of the location of the user equipment (20), to a specific public safety answering point (180),
wherein, a further mobile communication network (200) is able to terminate or deliver emergency calls to the specific public safety answering point (180) as well,
**characterized in that**, in order for the user equipment (20) to be able to conduct a specific emergency call in case that an error situation or failure situation prevents the mobile communication network (100) to successfully terminate or deliver the specific emergency call to the public safety answering point (180), the mobile communication network (100) being configured as follows:
-- the mobile communication network (100) is configured such that the specific emergency call initiated by the user equipment (20) is communicated to the access network (110),
-- the mobile communication network (100) is configured to detect that an error situation or failure situation prevents the mobile communication network (100) to successfully terminate or deliver the specific emergency call to the public safety answering point (180), wherein the mobile communication network (100) comprises an emergency call verification entity or functionality (129), wherein the emergency call verification entity or functionality (129) is able to detect that an error situation or failure situation prevents the mobile communication network (100) to successfully terminate or deliver an emergency call to the public safety answering point (180),
wherein the emergency call verification entity or functionality (129) is configured to detect such an error situation or failure situation by repeatedly, at least once during a predefined time interval, conducting probe emergency calls,
-- the mobile communication network (100) is configured to route or transfer the specific emergency call to the further mobile communication network (200), from where it is terminated or delivered to the public safety answering point (180), or the mobile communication network (100) is configured to transmit a specific error code to the user equipment such that the user equipment (20) initiates a further emergency call to the public safety answering point (180), using the further mobile communication network (200).

9. User equipment for conducting an emergency call in a country, or a geographic region within a country, being part of the coverage area of a mobile communication network (100) according to claim 8, wherein the user equipment (20) is configured to initiate the specific emergency call and to initiate the further emergency call to the public safety answering point (180), using the further mobile communication network (200) after receiving the specific error code from the mobile communication network (100).

10. Program comprising a computer readable program code which, when executed in a mobile communication network (100), causes the mobile communication network (100) to perform the second and third step of a method according one of claims 1 to 7.

11. Computer-readable medium comprising instructions which when executed in a mobile communication network (100), causes mobile communication network (100) to perform the second and third step of a method according one of claims 1 to 7.
